# EUROPEAN PATENT APPLICATION

(11) **EP 4 745 344 A1**
(43) Date of publication of application: **20.05.2026**
(21) Application number: 24891278.4
(22) Date of filing: 05.11.2024
(51) Int. Cl.: E04H 9/02, F16F 15/023

(54) **FLOATING-TYPE BASE ISOLATION SYSTEM**

(30) Priority: 13.11.2023 JP 2023192748
(71) Applicant: IHI Corporation, Tokyo 135-8710 (JP)
(72) Inventor: SHIMADA, Takahiro, Tokyo 135-8710 (JP); MOTEGI, Haruki, Tokyo 135-8710 (JP)
(74) Representative: Marks & Clerk LLP
(86) International application number: PCT/JP2024/039278
(87) International publication number: WO 2025/105239

(57) **Abstract**

A floating seismic isolation system (100) includes: a liquid storage portion (110) that stores a liquid in a storage space (S) defined by an inner wall (120a) of a wall portion (120); and a floating structure (130) arranged so as to float in the liquid stored in the storage space (S) of the liquid storage portion (110). A region (first inclined surface P1) inclined with respect to an outer surface (134) of the floating structure (130) is provided on the inner wall (120a) of the wall portion (120) of the liquid storage portion (110).

## Description

### Technical Field

The present disclosure relates to a floating seismic isolation system. This application claims the benefit of priority to Japanese Patent Application No. 2023-192748 filed on November 13, 2023, and contents thereof are incorporated in this application.

### Background

Hitherto, a floating seismic isolation system using a liquid has been developed. As the floating seismic isolation system, for example, in Patent Literature 1, there is disclosed a technology in which a liquid is stored in a rectangular parallelepiped storage space formed in a tank, and a floating structure is caused to float in the liquid.

In the technology of Patent Literature 1, the floating structure includes: a floating body, which is formed of a plurality of rod-shaped members extending in a horizontal direction, and which is provided in the liquid; a foundation provided on the floating body; and a building provided on the foundation.

### Citation List

### Patent Literature

Patent Literature 1: JP 2009-114659 A

### Summary

### Technical Problem

However, in the technology as in Patent Literature 1 described above in which an inner wall of the tank and a side wall surface of the floating body are arranged in parallel to each other, a distance between the inner wall of the tank and the side wall surface of the floating body is equal over the entire side wall surface of the floating body. In this case, arrival times of wave motions of an earthquake propagating from the inner wall of the tank to the side wall surface of the floating body become equal over the entire side wall surface of the floating body. As a result, there arises a problem in that the floating structure vibrates significantly due to the earthquake.

In view of such a problem, the present disclosure has an object to provide a floating seismic isolation system that enables suppressing vibration of a floating structure due to an earthquake.

### Solution to Problem

In order to solve the above-mentioned problem, a floating seismic isolation system according to one aspect of the disclosure includes: a liquid storage portion that stores a liquid in a storage space defined by an inner wall of a wall portion; and a floating structure arranged so as to float in the liquid stored in the storage space of the liquid storage portion, wherein a region inclined with respect to an outer surface of the floating structure is provided on the inner wall of the wall portion of the liquid storage portion.

In the inner wall of the wall portion of the liquid storage portion, an area of a region parallel to the outer surface of the floating structure may be smaller than an area of a region non-parallel to the outer surface of the floating structure.

The wall portion of the liquid storage portion may have a side wall portion; the outer surface of the floating structure may have a side surface extending in a vertical direction or a substantially vertical direction; and an inner wall of the side wall portion may have a first inclined surface inclined in a direction separating from the side surface of the floating structure from a lower side toward an upper side.

The inner wall of the side wall portion may have a second inclined surface inclined in a direction approaching the side surface of the floating structure from the lower side toward the upper side.

The inner wall of the wall portion of the liquid storage portion may include a plurality of protruding portions each having a tapered shape.

The inner wall of the wall portion of the liquid storage portion and the protruding portions may be separate bodies.

### Advantageous Effects of Invention

According to the present disclosure, it becomes possible to suppress the vibration of the floating structure due to the earthquake.

### Brief Description of Drawings

FIG. 1 is an explanatory diagram for illustrating a floating seismic isolation system according to a first embodiment.
FIG. 2 is an explanatory diagram for illustrating a liquid storage portion in a first modification example.
FIG. 3 is an explanatory diagram for illustrating a liquid storage portion in a second modification example.
FIG. 4 is an explanatory diagram for illustrating a floating seismic isolation system according to a second embodiment.

### Description of Embodiments

Now, with reference to the attached drawings, embodiments of the present disclosure are described in detail. The dimensions, materials, and other specific numerical values represented in the embodiments are merely examples used for facilitating the understanding of the disclosure, and do not limit the present disclosure unless otherwise particularly noted. Elements having substantially the same functions and configurations herein and in the drawings are denoted by the same reference symbols to omit redundant description thereof. Further, illustration of elements with no direct relationship to the present disclosure is omitted.

### [First Embodiment: Floating seismic Isolation System 100]

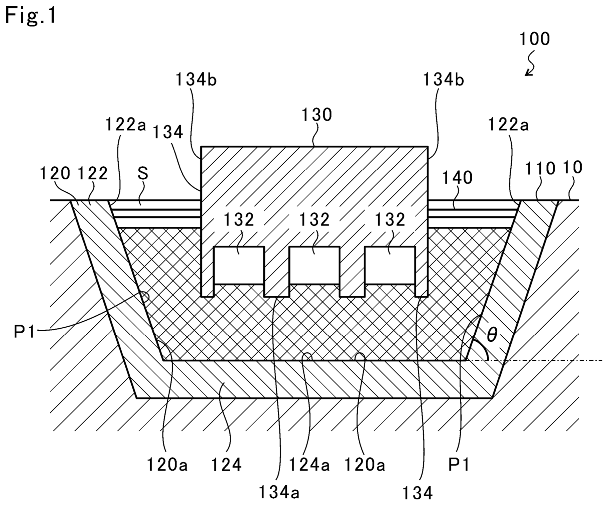

FIG. 1 is an explanatory diagram for illustrating a floating seismic isolation system 100 according to a first embodiment. As illustrated in FIG. 1, the floating seismic isolation system 100 according to the first embodiment includes a liquid storage portion 110, a floating structure 130, and a mooring portion 140. In the following drawings including FIG. 1, cross-hatching indicates a liquid.

The liquid storage portion 110 is provided in, for example, a recess or a hole formed by digging a ground 10. The liquid storage portion 110 includes a wall portion 120. The liquid storage portion 110 stores a liquid in a storage space S defined by an inner wall 120a of the wall portion 120. The wall portion 120 includes, for example, a side wall portion 122 and a bottom wall portion 124. The side wall portion 122 is a wall standing upright from the bottom wall portion 124. The bottom wall portion 124 is a wall extending in a horizontal direction or a substantially horizontal direction. In this embodiment, the storage space S is defined by inner walls 122a of the side wall portion 122 and an inner wall 124a of the bottom wall portion 124. That is, a side surface of the storage space S is formed by the inner walls 122a of the side wall portion 122. Further, a bottom surface of the storage space S is formed by the inner wall 124a of the bottom wall portion 124.

The liquid stored in the liquid storage portion 110 is, for example, water. The liquid is not limited to water, and may be any liquid other than water, or may be other liquid including water as main component (for example, sea water).

The floating structure 130 is arranged so as to float in the liquid stored in the storage space S of the liquid storage portion 110. The floating structure 130 is arranged apart from the inner wall 120a of the wall portion 120 of the liquid storage portion 110 (for example, the inner walls 122a of the side wall portion 122, and the inner wall 124a of the bottom wall portion 124). The floating structure 130 is, for example, a floating nuclear power plant. However, the floating structure 130 is not limited to the floating nuclear power plant, and may be a structure of other plant such as a wind power plant, a wave power plant, and a solar power plant, or may be a structure to which any equipment is mounted.

One or a plurality of gas accommodation portions 132 are provided in the floating structure 130. A gas is accommodated in the gas accommodation portion 132. The gas accommodation portion 132 is provided, for example, on a bottom surface 134a of an outer surface 134 of the floating structure 130. The gas accommodated in the gas accommodation portion 132 is brought into contact with the liquid stored in the liquid storage portion 110. The gas accommodated in the gas accommodation portion 132 is, for example, air or nitrogen.

A volume of the gas accommodation portion 132 is set based on a natural frequency of a system responding to a seismic wave propagating in a fluid containing a liquid and a gas. The volume of the gas accommodation portion 132 is set, for example, so that the natural frequency of the system responding to the seismic wave becomes smaller than a natural frequency of each of the floating structure 130 and equipment mounted on the floating structure 130. Further, the volume of the gas accommodation portion 132 is set, for example, so that the natural frequency of the system responding to the seismic wave becomes less than 1 Hz.

The mooring portion 140 is a pillar extending in the horizontal direction or the substantially horizontal direction. The mooring portion 140 is, for example, a column or a prism. One end of the mooring portion 140 is fixed to a corresponding one of side surfaces 134b of the outer surface 134 of the floating structure 130. Another end of the mooring portion 140 is fixed to a corresponding one of the inner walls 122a of the side wall portion 122 of the liquid storage portion 110.

The mooring portion 140 is formed of a material that does not undergo plastic deformation (for example, buckling deformation) even when a load less than a predetermined seismic intensity is applied, and that undergoes plastic deformation when a load equal to or more than the predetermined seismic intensity is applied. The mooring portion 140 may be formed of a material that is compressively broken when the load equal to or more than the predetermined seismic intensity is applied. The predetermined seismic intensity is set according to the floating structure 130 and the equipment mounted thereon.

### [Relationship between Inner Wall 120a of Liquid Storage Portion 110 and Outer Surface 134 of Floating Structure 130]

Subsequently, a relationship between the inner wall 120a of the liquid storage portion 110 and the outer surface 134 of the floating structure 130 is described.

A region inclined with respect to the outer surface 134 of the floating structure 130 is provided on the inner wall 120a of the wall portion 120 of the liquid storage portion 110.

Specifically, in this embodiment, the floating structure 130 is, for example, a rectangular parallelepiped. Accordingly, the outer surface 134 of the floating structure 130 includes the bottom surface 134a and four side surfaces 134b. The four side surfaces 134b of the floating structure 130 extend, for example, in the vertical direction or the substantially vertical direction.

Further, in this embodiment, the storage space S of the liquid storage portion 110 is, for example, a quadrangular truncated pyramid having an upper surface larger than a bottom surface. That is, in this embodiment, four inner walls 122a of the side wall portion 122 of the liquid storage portion 110 are each formed of a first inclined surface P1. The four first inclined surfaces P1 face the four side surfaces 134b of the floating structure 130, respectively. The first inclined surface P1 is inclined in a direction separating from the side surface 134b of the floating structure 130 from a lower side toward an upper side. Further, the first inclined surface P1 is inclined in a direction expanding outward of the liquid storage portion 110 from the lower side toward the upper side.

An inclination angle θ of the first inclined surface P1 from a horizontal plane is, for example, 10° or more and less than 75°, appropriately 10° or more and less than 45°.

In this embodiment, the bottom surface 134a of the outer surface 134 of the floating structure 130 extends, for example, in the horizontal direction or the substantially horizontal direction. Further, in this embodiment, the inner walls 124a of the bottom wall portion 124 of the liquid storage portion 110 extend, for example, in the horizontal direction or the substantially horizontal direction.

As described above, in the floating seismic isolation system 100 according to this embodiment, the side surface 134b of the floating structure 130 extends in the vertical direction or the substantially vertical direction, and the inner wall 122a (inner surface) of the side wall portion 122 of the liquid storage portion 110 is formed of the first inclined surface P1. Accordingly, in the inner wall 122a of the side wall portion 122 of the liquid storage portion 110, an area of a region parallel to the side surface 134b of the floating structure 130 can be set substantially to zero. Thus, as compared with a case in which the inner wall 122a of the side wall portion 122 is parallel to the side surface 134b of the floating structure 130, it is possible to increase a region in the side surface 134b of the floating structure 130, in which a distance between the side surface 134b and the inner wall 122a of the side wall portion 122 of the liquid storage portion 110 varies. That is, it becomes possible to increase a region in the side surface 134b of the floating structure 130, in which an arrival time of a wave motion (pressure wave) of an earthquake propagating from the inner wall 122a of the side wall portion 122 of the liquid storage portion 110 varies. Accordingly, the floating seismic isolation system 100 according to this embodiment can reduce the wave motions of the earthquake simultaneously reaching the side surface 134b of the floating structure 130, resulting in that the vibration of the floating structure 130 due to the earthquake can be suppressed.

Further, a traveling direction of the wave motion propagating from the first inclined surface P1 of the side wall portion 122 of the liquid storage portion 110 to the liquid due to the earthquake, and a normal direction of the side surface 134b of the floating structure 130 can be set different from each other. Accordingly, the floating seismic isolation system 100 according to this embodiment can suppress propagation of the wave motion from the liquid to the floating structure 130, resulting in that the excitation of the floating structure 130 due to the earthquake can be suppressed.

Further, as described above, the first inclined surface P1 of the side wall portion 122 of the liquid storage portion 110 is inclined in the direction expanding outward of the liquid storage portion 110 from the lower side toward the upper side. Accordingly, as compared with the case in which the inner wall 122a of the side wall portion 122 is parallel to the side surface 134b of the floating structure 130, an area of a liquid surface (open surface) of the liquid storage portion 110 can be increased. Thus, in the liquid storage portion 110, a space in which the liquid is movable on the liquid surface can be expanded, and the propagation of the wave motion due to the earthquake to the floating structure 130 via the liquid stored in the liquid storage portion 110 can be further suppressed.

Further, as described above, the floating structure 130 includes the gas accommodation portion 132 provided on the bottom surface 134a. The volume of the gas accommodation portion 132 is set based on the natural frequency of the system responding to the seismic wave propagating in the fluid containing the liquid and the gas. Accordingly, excitation of the floating structure 130 and the equipment mounted thereon due to the earthquake can be reduced.

Further, as described above, the floating seismic isolation system 100 includes the mooring portion 140. Accordingly, when no earthquake occurs, or when an earthquake having a seismic intensity less than the predetermined seismic intensity occurs, it is possible to avoid a situation in which the floating structure 130 moves in the horizontal direction due to wind or the like. Further, as described above, the mooring portion 140 undergoes plastic deformation or is compressively broken when the earthquake having the seismic intensity equal to or more than the predetermined seismic intensity occurs. Thus, when the earthquake having the seismic intensity equal to or more than the predetermined seismic intensity occurs, the propagation of the wave motion from the side wall portion 122 to the floating structure 130 can be suppressed.

### [First Modification Example]

In the first embodiment described above, the case in which the inner wall 122a of the side wall portion 122 of the liquid storage portion 110 is formed of only the first inclined surface P1 has been given as an example. However, the inner wall of the side wall portion of the liquid storage portion may include an inclined surface that is different in a direction of inclination with respect to the side surface 134b of the floating structure 130 from the first inclined surface P1.

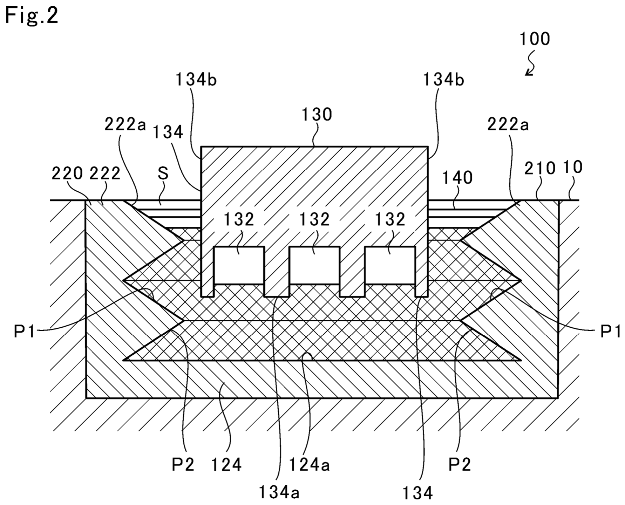

FIG. 2 is an explanatory diagram for illustrating a liquid storage portion 210 in a first modification example. Components substantially the same as those of the above-mentioned floating seismic isolation system 100 are denoted by the same reference symbols, and description thereof is omitted.

As illustrated in FIG. 2, a wall portion 220 of the liquid storage portion 210 in the first modification example includes a side wall portion 222 and the bottom wall portion 124. In the first modification example, inner walls 222a of the side wall portion 222 each include a second inclined surface P2 in addition to the first inclined surface P1. The second inclined surface P2 is inclined in a direction approaching the side surface 134b of the floating structure 130 from the lower side toward the upper side.

Also in the first modification example, in the inner wall 222a of the side wall portion 222 of the liquid storage portion 210, an area of a region parallel to the side surface 134b of the floating structure 130 can be set substantially to zero.

As illustrated in FIG. 2, in the first modification example, it is appropriate that a region located uppermost in the inner wall 222a of the side wall portion 222 of the liquid storage portion 210 is set as the first inclined surface P1. Accordingly, the area of the liquid surface (open surface) of the liquid storage portion 210 can be increased.

### [Second Modification Example]

In the above-mentioned first embodiment, the case in which the inner wall 122a of the side wall portion 122 of the liquid storage portion 110 includes only the first inclined surface P1 has been given as an example. However, inner walls 322a of a side wall portion 322 of a liquid storage portion 310 may each include a surface other than the first inclined surface P1.

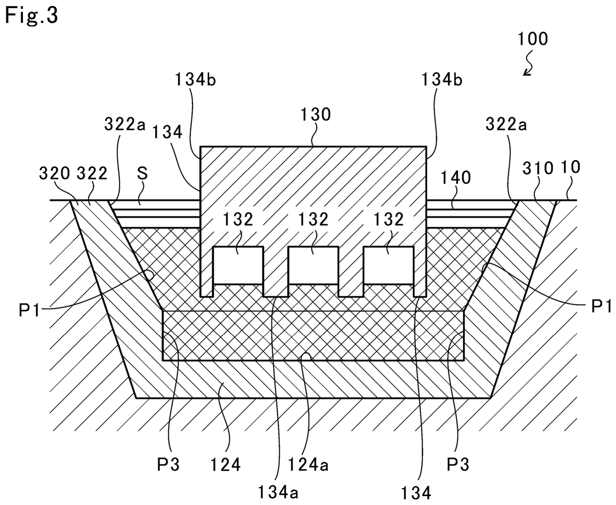

FIG. 3 is an explanatory diagram for illustrating the liquid storage portion 310 according to a second modification example. Components substantially the same as those of the above-mentioned floating seismic isolation system 100 are denoted by the same reference numerals, and description thereof is omitted.

As illustrated in FIG. 3, a wall portion 320 of the liquid storage portion 310 in the second modification example includes the side wall portion 322 and the bottom wall portion 124. In the second modification example, in the inner wall 322a of the side wall portion 322, a region facing the side surface 134b of the floating structure 130 is the first inclined surface P1, and a region not facing the side surface 134b of the floating structure 130 is a vertical surface P3. The vertical surface P3 extends in the vertical direction or the substantially vertical direction. An angle formed by the vertical surface P3 and the inner wall 124a of the bottom wall portion 124 is, for example, 90°.

Also in the second modification example, in the inner wall 322a of the side wall portion 322 of the liquid storage portion 310, an area of a region parallel to the side surface 134b of the floating structure 130 can be set substantially to zero.

### [Second Embodiment]

In the above-mentioned first embodiment, the case in which the inner wall 122a of the side wall portion 122 of the liquid storage portion 110 includes the first inclined surface P1 has been given as an example. However, it is sufficient that, in the inner wall of the wall portion of the liquid storage portion, the area of the region parallel to the outer surface 134 of the floating structure 130 is smaller than the area of the region non-parallel to the outer surface 134 of the floating structure 130.

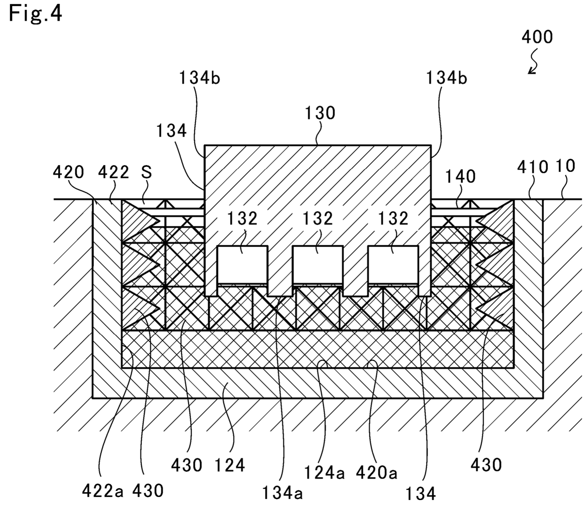

FIG. 4 is an explanatory diagram for illustrating a floating seismic isolation system 400 according to a second embodiment. As illustrated in FIG. 4, the floating seismic isolation system 400 according to the second embodiment includes a liquid storage portion 410, the floating structure 130, and the mooring portion 140. Components substantially the same as those of the above-mentioned floating seismic isolation system 100 are denoted by the same reference numerals, and description thereof is omitted.

The liquid storage portion 410 in this embodiment includes a wall portion 420. The wall portion 420 includes a side wall portion 422 and the bottom wall portion 124.

In this embodiment, inner walls 422a of the side wall portion 422 each extend in the vertical direction or the substantially vertical direction. The inner wall 422a of the side wall portion 422 is parallel or substantially parallel to the side surface 134b of the floating structure 130. That is, the storage space S defined by an inner wall 420a of the wall portion 420 of the liquid storage portion 410 in this embodiment is, for example, a rectangular parallelepiped or a substantially rectangular parallelepiped.

Further, in this embodiment, a plurality of protruding portions 430 are provided on the inner wall 422a of the side wall portion 422. The protruding portions 430 protrude from the inner wall 422a of the side wall portion 422. The protruding portions 430 each have a tapered shape. The protruding portions 430 each have, for example, a pyramid shape such as a triangular pyramid shape, a quadrangular pyramid shape, a pentagonal pyramid shape, or a hexagonal pyramid shape, or a conical shape. Accordingly, a surface of each of the protruding portions 430 is inclined with respect to the side surface 134b of the floating structure 130. The surface of each of the protruding portions 430 forms an inner surface of the side wall portion 422.

The plurality of protruding portions 430 are provided without a gap, for example, at least in a region facing the side surface 134b of the floating structure 130, in the inner wall 422a of the side wall portion 422.

The protruding portions 430 are, for example, bodies separate from the inner wall 422a. The term "separate bodies" as used herein means that, for example, the inner wall 422a and the protruding portions 430 are formed separately from each other, and does not always mean that the inner wall 422a and the protruding portions 430 are separable from each other. For example, a case in which, after the protruding portions 430 are formed separately from the inner wall 422a, the protruding portions 430 are attached to the inner wall 422a by a known method such as adhesion, screwing, or fastening may be adopted. Further, the plurality of protruding portions 430 may be free of being bodies separate from each other. For example, a case in which bases of the plurality of protruding portions 430 are formed integrally with a flat plate, and the flat plate and the inner wall 422a are attached to each other by a known method such as adhesion, screwing, or fastening may be adopted. Further, the inner wall 422a and the protruding portion 430 may be formed of different materials. For example, the inner wall 422a may be formed of a material having high rigidity such as concrete, and the protruding portion 430 may be formed of a material having elasticity such as urethane foam.

As described above, in the floating seismic isolation system 400 according to this embodiment, the inner wall 422a of the side wall portion 422 of the liquid storage portion 410 includes the plurality of protruding portions 430 each having the surface inclined with respect to the side surface 134b of the floating structure 130. Accordingly, in the region including the plurality of protruding portions 430 in the inner wall 422a of the side wall portion 422 of the liquid storage portion 410, the area of the region parallel to the side surface 134b of the floating structure 130 can be set substantially to zero. As a result, as compared with a case in which the inner wall 422a of the side wall portion 422 of the liquid storage portion 410 includes no protruding portion 430, it is possible to increase a region in the side surface 134b of the floating structure 130, in which a distance between the side surface 134b and the inner surface of the side wall portion 422 of the liquid storage portion 410 varies. That is, in the side surface 134b of the floating structure 130, it becomes possible to increase a region in which an arrival time of the wave motion of the earthquake propagating from the inner surface of the side wall portion 422 of the liquid storage portion 410 is different. Accordingly, the floating seismic isolation system 400 according to this embodiment can reduce the wave motion of the earthquake simultaneously reaching the side surface 134b of the floating structure 130, resulting in that the vibration of the floating structure 130 due to the earthquake can be suppressed.

Further, due to the earthquake, a traveling direction of the wave motion propagating from the surface of the protruding portion 430 of the side wall portion 422 of the liquid storage portion 410 to the liquid can be made different from the normal direction of the side surface 134b of the floating structure 130. Accordingly, the floating seismic isolation system 400 according to this embodiment can suppress propagation of the wave motion from the liquid to the floating structure 130, resulting in that the vibration of the floating structure 130 due to the earthquake can be suppressed.

Further, as described above, the protruding portions 430 are bodies separate from the inner wall 422a of the side wall portion 422. Accordingly, the protruding portions 430 can be easily installed on the inner wall 422a.

Further, in the floating seismic isolation system 400 according to the second embodiment, a volume of the storage space S of the liquid storage portion 410 can be set smaller as compared with the floating seismic isolation system 100 according to the first embodiment described above. Accordingly, an installation area of the floating seismic isolation system 400 can be set smaller.

The embodiments have been described above with reference to the attached drawings, but, needless to say, the present disclosure is not limited to the embodiments. It is apparent that those skilled in the art may arrive at various alternations and modifications within the scope of claims, and those examples are construed as naturally falling within the technical scope of the present disclosure.

For example, in the first embodiment and the first modification example described above, the case in which the wall portion 120, 220 includes the side wall portion 122, 222 and the bottom wall portion 124 has been given as an example. However, the wall portion 120, 220 may include no bottom wall portion 124. For example, the wall portion 120 may include only the side wall portion 122 formed of the first inclined surfaces P1. In this case, the bottom surface 134a of the floating structure 130 faces the first inclined surfaces P1. Similarly, the wall portion 220 may include only the side wall portion 222 formed of the first inclined surfaces P1 and the second inclined surfaces P2. In this case, the bottom surface 134a of the floating structure 130 faces the first inclined surfaces P1.

Further, in the first embodiment and the first and second modification examples described above, the case in which the side surface 134b of the floating structure 130 extends in the vertical direction or the substantially vertical direction has been given as an example. However, the side surface 134b of the floating structure 130 may be inclined. In this case, the inner wall 122a, 222a, 322a of the side wall portion 122, 222, 322 of the liquid storage portion 110, 210, 310 may extend in the vertical direction or the substantially vertical direction. In any case, it is sufficient that the inner wall 122a, 222a, 322a of the side wall portion 122, 222, 322 of the liquid storage portion 110, 210, 310 are inclined with respect to the side surface 134b of the floating structure 130.

Further, in the second embodiment described above, the case in which the plurality of protruding portions 430 are bodies separate from the inner wall 422a of the side wall portion 422 of the liquid storage portion 410 has been given as an example. However, the protruding portions 430 may be formed integrally with the inner wall 422a of the side wall portion 422 of the liquid storage portion 410.

Further, in the second embodiment described above, the case in which the plurality of protruding portions 430 are provided at least in the region facing the side surface 134b of the floating structure 130 in the inner wall 422a of the side wall portion 422 of the liquid storage portion 410 has been given as an example. However, the plurality of protruding portions 430 may be provided on the entire inner wall 422a of the side wall portion 422 of the liquid storage portion 410.

Further, in the second embodiment described above, the case in which the plurality of protruding portions 430 are provided without a gap in the inner wall 422a of the side wall portion 422 of the liquid storage portion 410 has been given as an example. However, the plurality of protruding portions 430 may be provided at predetermined intervals.

Further, in the first and second embodiments and the first and second modification examples described above, the case in which the gas accommodation portion 132 is provided on the bottom surface 134a of the floating structure 130 has been given as an example. However, the floating structure 130 may include no gas accommodation portion 132. In this case, it is appropriate that the inner wall 124a of the bottom wall portion 124 of the liquid storage portion 110, 210, 310 includes an inclined surface or a protruding portion 430.

Further, in the first embodiment and the first and second modification examples described above, a plurality of protruding portions 430 may be provided on the inner wall 124a of the bottom wall portion 124.

Further, in the first and second embodiments and the first and second modification examples described above, the case in which the floating seismic isolation system 100 includes the mooring portion 140 has been given as an example. However, the mooring portion 140 may be free of being provided.

### Reference Signs List

P1 first inclined surface, P2 second inclined surface, S storage space, 100 floating seismic isolation system, 110 liquid storage portion, 120 wall portion, 120a inner wall, 122 side wall portion, 122a inner wall, 124 bottom wall portion, 124a inner wall, 130 floating structure, 134 outer surface, 134a bottom surface, 134b side surface, 210 liquid storage portion, 220 wall portion, 222 side wall portion, 222a inner wall, 310 liquid storage portion, 320 wall portion, 322 side wall portion, 322a inner wall, 400 floating seismic isolation system, 410 liquid storage portion, 420 wall portion, 422 side wall portion, 422a inner wall, 430 protruding portion

## Claims

1. A floating seismic isolation system comprising:
a liquid storage portion that stores a liquid in a storage space defined by an inner wall of a wall portion; and
a floating structure arranged so as to float in the liquid stored in the storage space of the liquid storage portion,
wherein a region inclined with respect to an outer surface of the floating structure is provided on the inner wall of the wall portion of the liquid storage portion.

2. The floating seismic isolation system according to claim 1, wherein, in the inner wall of the wall portion of the liquid storage portion, an area of a region parallel to the outer surface of the floating structure is smaller than an area of a region non-parallel to the outer surface of the floating structure.

3. The floating seismic isolation system according to claim 1 or 2,
wherein the wall portion of the liquid storage portion includes a side wall portion,
wherein the outer surface of the floating structure includes a side surface extending in a vertical direction or a substantially vertical direction, and
wherein an inner wall of the side wall portion includes a first inclined surface inclined in a direction separating from the side surface of the floating structure from a lower side toward an upper side.

4. The floating seismic isolation system according to claim 3, wherein the inner wall of the side wall portion includes a second inclined surface inclined in a direction approaching the side surface of the floating structure from the lower side toward the upper side.

5. The floating seismic isolation system according to claim 1 or 2, wherein the inner wall of the wall portion of the liquid storage portion includes a plurality of protruding portions each having a tapered shape.

6. The floating seismic isolation system according to claim 5, wherein the inner wall of the wall portion of the liquid storage portion and the protruding portions are separate bodies.
